(19) Europäisches Patentamt
European Patent Office
Office européen des brevets

(11) **EP 2 135 439 B1**

(12) **FASCICULE DE BREVET EUROPEEN**

(45) Date de publication et mention de la délivrance du brevet:
**28.03.2018 Bulletin 2018/13**

(21) Numéro de dépôt: **07871941.6**

(22) Date de dépôt: **14.12.2007**

(51) Int Cl.:
*H04N 1/60* *(2006.01)*    *H04N 9/64* *(2006.01)*

(86) Numéro de dépôt international:
**PCT/FR2007/052525**

(87) Numéro de publication internationale:
**WO 2008/122701 (16.10.2008 Gazette 2008/42)**

(54) **PROCEDES ET SYSTEMES POUR LES AFFICHAGES DE CORRECTION CHROMATIQUE AVEC DES GAMMES CHROMATIQUES DIFFERENTES**

VERFAHREN UND VORRICHTUNG FUR ANZEIGE DER FARBKORREKTUR MIT VERSCHIEDEN FARBTONBEREICH

METHODS AND SYSTEMS FOR DISPLAYS WITH CHROMATIC CORRECTION WITH DIFFERING CHROMATIC RANGES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **03.04.2007 US 921579 P**

(43) Date de publication de la demande:
**23.12.2009 Bulletin 2009/52**

(73) Titulaire: **Thomson Licensing DTV**
**92130 Issy-les-Moulineaux (FR)**

(72) Inventeurs:
• **DOSER, INGO**
**78166 Donaueschingen (DE)**

• **STAUDER, JURGEN**
**F-35440 Montreuil/ille (FR)**
• **LEE, BONGSUN**
**La Crescenta, California 91214 (US)**

(74) Mandataire: **Huchet, Anne et al**
**TECHNICOLOR**
**1-5, rue Jeanne d'Arc**
**92130 Issy-les-Moulineaux (FR)**

(56) Documents cités:
**EP-A- 1 578 140        US-A1- 2002 120 781**
**US-A1- 2005 152 597    US-A1- 2005 152 612**

**EP 2 135 439 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Les présents principes concernent généralement des affichages de télévision et, plus particulièrement, des procédés et des systèmes pour une correction chromatique afin d'obtenir des résultats prévisibles sur des affichages avec des gammes chromatiques différentes.

Dans l'industrie cinématographique d'aujourd'hui, les couleurs d'un contenu cinématographique sont en général graduées pour des affichages avec une gamme chromatique unique définie par des couleurs de luminophores de tube cathodique (CRT), correspondant à la norme chromatique soit de l'Union européenne de diffusion (EBU), soit de la Société des ingénieurs du cinéma et de la télévision (SMPTE-C) pour la définition de normes, et des 709 couleurs pour la haute définition de l'Union internationale des télécommunications (ITU). Celles-ci sont les normes actuelles pour l'utilisation dans la détermination de la gamme chromatique de référence (RCG) pour des affichages. Cependant, des affichages avec des gammes chromatiques non standard sont actuellement courantes parmi les clients de contenu cinématographique.

En cas d'édition des couleurs d'une image sur un affichage avec une gamme chromatique de référence autre que la gamme chromatique de l'affichage cible, les couleurs résultantes peuvent paraître insatisfaisantes sur l'affichage cible. Pour illustrer des cas où les couleurs résultantes peuvent paraître insatisfaisantes, les deux cas suivants sont décrits.

Le premier cas concerne des affichages de grande consommation ayant des gammes chromatiques grossièrement de la même taille que l'affichage de référence, mais les couleurs primaires d'affichage ne sont pas égales aux couleurs primaires d'affichage de l'affichage de référence pendant la création du contenu. Dans ces circonstances, il est souhaitable de garantir que les couleurs peuvent être représentées précisément sur les affichages de grande consommation.

Le second cas concerne l'existence actuelle d'affichages à gamme chromatique étendue étant utilisés sur le terrain. Dans ces circonstances, aucun procédé n'existe pour corriger chromatiquement des affichages de grande consommation par rapport à ces affichages à gamme chromatique étendue. Par exemple, ces affichages de grande consommation peuvent utiliser une gamme chromatique de référence différente mais peuvent être susceptibles ou non d'afficher seulement des couleurs en accord avec les normes de gamme chromatique étendue.

Il existe une analogie à la situation lorsque la télévision couleur a été introduite initialement aux États-Unis. Beaucoup d'ensembles différents de couleurs primaires ont été utilisés à cette époque qui ne permettaient pas une colorimétrie unifiée. Cependant, l'accumulation par un des principaux fabricants de postes de télévision d'une quantité significative de luminophores produits par un fabricant particulier de luminophores a conduit à la formation effective d'une quasi-norme et, ensuite, finalement d'une norme (SMPTE-C). Cependant la Commission fédérale des communications (FCC) n'a jamais adopté celle-ci et l'industrie de fabrication de postes de télévision doit vivre avec cette dichotomie. Il a existé des tentatives par la Société des ingénieurs du cinéma et de la télévision (SMPTE) d'émuler les couleurs du Comité national de système de télévision (NTSC) sur un moniteur SMPTE-C qui a finalement échoué pour des raisons technologiques à cette époque.

La gamme chromatique d'un affichage est déterminée par la technologie d'affichage choisie. En ce moment, un client a le choix entre les technologies suivantes (également qualifiées dans la présente de « type d'affichage ») comprenant, par exemple, un affichage à cristaux liquides (LCD), un affichage à plasma, un affichage à tube cathodique (CRT), un affichage à traitement numérique de la lumière (DLP), et un affichage réflecteur sur cristal de silicium (SXRD). Cependant, il peut exister des différences significatives entre des technologies d'affichage différentes, ainsi qu'entre deux représentants de la même technologie d'affichage. Par exemple, deux ensembles d'affichages à cristaux liquides peuvent être équipés avec des ensembles différents de sources lumineuses. Un de ces ensembles de sources lumineuses peut être constitué de lampes fluorescentes à cathode froide (CCFL), où la gamme chromatique dépend principalement des luminophores utilisés. Historiquement, ces sources lumineuses ne permettaient pas l'utilisation d'une gamme chromatique haute définition. En fait, les affichages qui utilisaient ces sources lumineuses ne pouvaient pas reproduire toutes les 709 couleurs, selon la norme de 709 couleurs de l'Union internationale des télécommunications (ITU) pour la haute définition. Cependant, des développements récents ont amené des produits sur le marché qui utilisent des dites lampes fluorescentes à cathode froide à gamme étendue (W-CCFL), où la gamme chromatique est encore plus importante que la gamme de 709 couleurs. Un autre composant de la technologie d'affichage à cristaux liquides est constitué de filtres colorés, qui pourraient être conçus pour avoir une sortie lumineuse élevée et, donc, une efficacité lumineuse élevée avec une gamme chromatique étroite, ou pourraient être conçus pour avoir une efficacité lumineuse luminescente et une gamme chromatique élargie. Une autre tendance est que des unités de rétroéclairage (BLU) CCFL d'un affichage LCD soient remplacées par des BLU à LED (diodes électroluminescentes) RGB avec une gamme chromatique encore plus élevée.

Des affichages à traitement numérique de la lumière et des affichages réflecteurs sur cristal de silicium (comprenant la projection arrière) sont des affichages réflecteurs qui filtrent la lumière provenant d'une source lumineuse. Actuellement, il existe des techniques différentes pour augmenter la gamme chromatique de ces dispositifs. En fait, à partir de maintenant, certains des affichages employant ces techniques différentes ont déjà une gamme chromatique augmentée par comparaison à la gamme chromatique de référence applicable actuelle.

Avec l'arrivée des affichages à gamme étendue, il est devenu possible d'afficher une plage de couleurs élargie qui n'était pas possible précédemment. Les contenus vidéo actuels sur des disques vidéo numériques (DVD), des programmes de télévision et/ou par l'intermédiaire de la vidéo sur le protocole Internet (VOIP) sont codés dans un espace colorimétrique avec une gamme chromatique de référence et, donc, suivent les règles qui ont été définies il y a plusieurs années lorsque l'affichage de gamme chromatique étendue n'était pas faisable. En fait, jusqu'à récemment il était difficile d'obtenir une reproduction même de la gamme chromatique de référence actuelle.

Comme il apparaît aujourd'hui, la situation a changé. Une gamme chromatique étendue est faisable et il existe un souhait d'utiliser la gamme chromatique élargie. Cependant, au lieu de choisir un autre ensemble de couleurs primaires de gamme chromatique étendue, la tendance actuelle qui semblait être préférée est l'utilisation de normes chromatiques ouvertes, non restrictives. Un exemple d'une telle norme est XYZ pour le cinéma numérique ou xvYCC (IEC 61966-2-3) pour la télévision grand public. D'autres exemples comprennent, par exemple, sYCC (Commission internationale électrotechnique (IEC) 61966-2-1), ITU-R BT.1361, ou e-sRGB (Association des fabricants d'imagerie et de photographie (PIMA) 7667) pour les graphiques informatiques et la photographie d'images fixes.

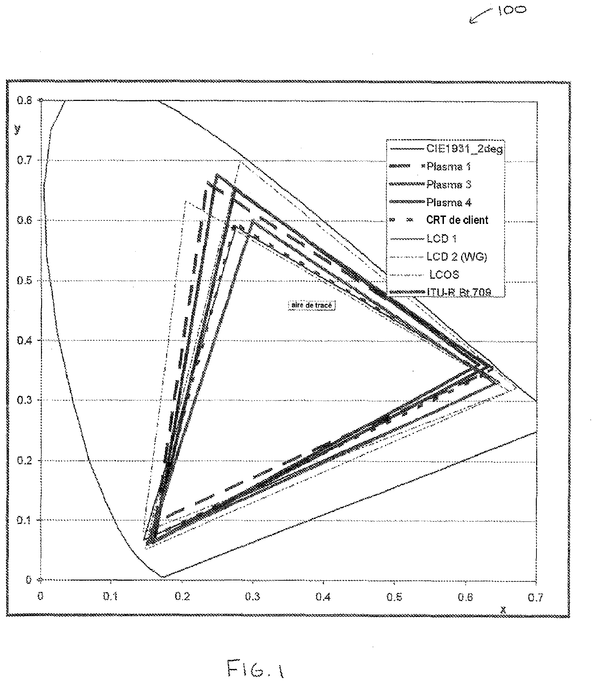

Au même moment, il existe une variation significative dans les gammes chromatiques utilisées dans les divers affichages disponibles actuellement. Jusqu'à récemment, la gamme chromatique a été déterminée plus ou moins par les luminophores de tube cathodique standard. Aujourd'hui, la plage de couleurs susceptible d'être affichée dépend de la technologie d'affichage utilisée et de la conception du matériel, comme décrit ci-dessus. En référence à la figure 1, des mesures de gamme chromatique des affichages disponibles actuellement sont indiquées généralement par le numéro de référence 100. Comme il est évident, il existe actuellement une quantité significative de différences entre les mesures de gammes chromatiques disponibles actuelles 100. Il doit être noté qu'aucune des gammes chromatiques des divers affichages disponibles n'est égale à la gamme chromatique de référence du matériau source qui, dans cet exemple, correspond à ITU-R Bt. 709. Par rapport à la figure 1, l'affichage avec la gamme chromatique la plus large était un affichage à cristaux liquides sur silicium (LCOS) en cours d'essai, avec un vert jaunissant, et un affichage à cristaux liquides (LCD) avec un rétroéclairage de gamme étendue avec un vert cyanique.

De plus, des affichages actuels semblent remplacer simplement les couleurs primaires de référence spécifiées par la norme applicable par les couleurs primaires correspondant à l'affichage respectif (par exemple, un type d'affichage respectif, une gamme chromatique respective mise en oeuvre sur cet affichage, et ainsi de suite), similaires au passé et l'utilisation de luminophores de tube cathodique différents. En conséquence, des couleurs n'apparaissent pas comme elles devraient. Autrement dit, des couleurs apparaissent différemment de ce qui était prévu pour leur apparence. Par exemple, des sapins ressemblent à des pins, des tomates ressemblent à des oranges, et ainsi de suite. Cependant le mappage des couleurs primaires est la solution la plus primitive et la moins chère de mappage de gamme.

Dans le cas d'un matériau de gamme étendue sur un affichage de gamme étendue, il existe encore un problème où des couleurs peuvent être affichées incorrectement en raison de la gamme chromatique du matériau de gamme étendue qui est différente de la gamme chromatique de l'affichage à gamme étendue. En fait, en utilisant les normes chromatiques non restrictives mentionnées ci-dessus comme xvYCC ou XYZ, il est toujours possible qu'une couleur soit transmise mais ne puisse pas être affichée sur un ou plusieurs affichages particuliers à gamme étendue.

Un procédé pour une correction chromatique implique le matriçage 3x3 des couleurs primaires sources sur les couleurs primaires de l'affichage (qui, cependant, demande une linéarisation préalable du signal vidéo). Cette solution présente des problèmes lorsque des couleurs sont transmises qui sont au-delà de la gamme chromatique de la gamme chromatique de l'affichage. En guise d'exemple, considérons un affichage avec trois couleurs primaires de rouge, vert et bleu, où la couleur à afficher peut être une couleur verte (par exemple, une variation de la couleur primaire verte), et que cette couleur peut être en dehors de la plage d'affichage. Le résultat typique d'une telle situation est que la couleur à afficher peut être découpée sur ses plages maximales respectives. Le problème se manifestera par une reproduction chromatique erronée, par une erreur de teinte, de saturation et également de luminosité. L'effet néfaste sera encore pire si la couleur apparaît dans une gradation (par exemple, comme constaté le plus souvent dans des films d'animation), lorsqu'un contour erroné apparaît également. Un contour erroné est l'apparition d'une structure ou d'un objet erroné(e) sur l'image à la suite d'artefacts dans le traitement du signal vidéo ou dans l'affichage.

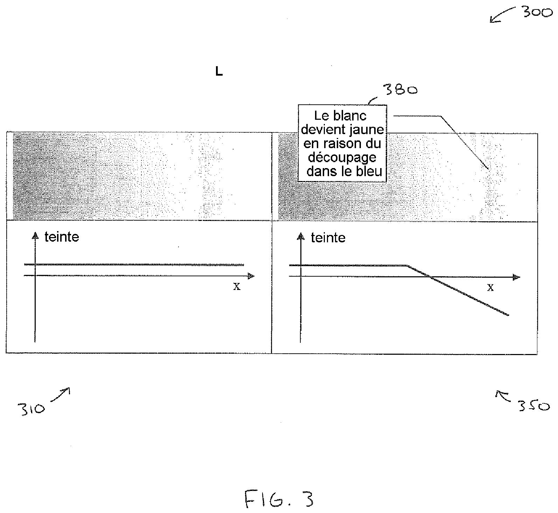

Considérons un autre exemple, comme suit. Une couleur blanche « cyanisante » est définie comme suit : bleu = max ; rouge = 0,8*max ; et vert = max ; sur un affichage de gamme étendue, où « max » représente la valeur permissible maximale. Sur un affichage de gamme étroite qui a un bleu moins saturé, ceci aboutira à un découpage du bleu, et le blanc deviendra verdâtre. Ce problème est illustré sur la figure 3. En référence à la figure 3, un changement de teinte sur une gradation blanche bleuissante due à une restriction de gamme chromatique est indiqué généralement par le numéro de référence 300. En particulier, le résultat souhaité est représenté sur la partie gauche de la figure 3 et est désignée par le numéro de référence 310, tandis que le résultat réel est représenté sur la partie droite de la figure 3 et est désignée par le numéro de référence 350. Comme indiqué par le numéro de référence 380 et le texte correspondant, le blanc devient jaune en raison du découpage dans le bleu.

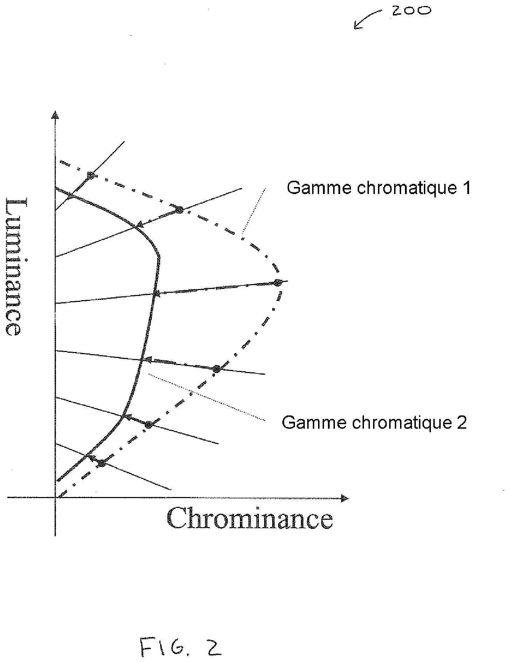

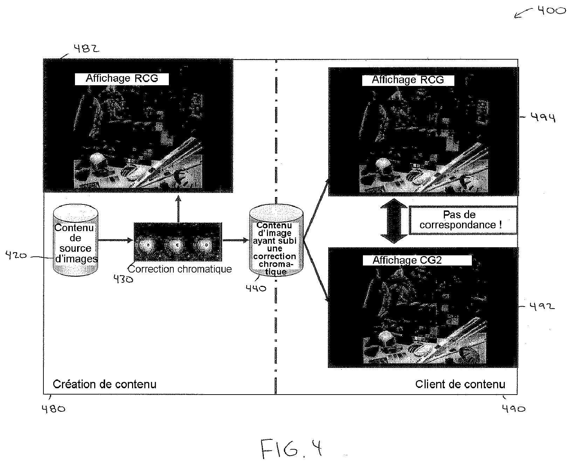

Il est par conséquent essentiel qu'une solution adéquate de mappage de gamme chromatique soit utilisée pour rendre des couleurs sur l'affichage utilisé. En référence à la figure 2, un mappage de gamme chromatique exemple est indiqué généralement par le numéro de référence 200. La figure 2 représente une « gamme chromatique 1 » et une « gamme chromatique 2 » comme une section transversale, où la « gamme chromatique 1 » est mappée dans la « gamme chromatique 2 » au moyen d'un mappage de gamme chromatique. Dans le mappage de gamme chromatique 100, la variation dans la luminance est représentée par rapport à l'axe vertical (généralement indiqué par l'axe Y), et la variance dans la chrominance est représentée par rapport à l'axe horizontal (généralement indiqué par l'axe X). L'exemple fourni est pour une « gamme chromatique 2 » inférieure à la « gamme chromatique 1 ». Cependant, il faut être conscient que le cas opposé est également possible, où la « gamme chromatique 2 » est supérieure à la « gamme chromatique 1 ». US2005/152612 décrit un algorithme d'amélioration d'image pour des images numériques qui identifie d'abord un espace couleur d'entrée puis applique une transformation d'espace de couleur pour produire une image numérique dans un espace de couleurs de référence. Un ou plusieurs paramètres de l'algorithme d'amélioration sont ajustés en fonction de l'espace de couleurs d'entrés. L'algorithme d'amélioration de l'image est ensuite appliqué avec les paramètres ajustés à l'image dans l'espace de couleur de référence pour produire une image améliorée dans l'espace de couleur de référence. En référence à la figure 4, un diagramme de haut niveau exemplaire représentant le flux de production pour une correction chromatique à l'aide d'un affichage ayant une gamme chromatique de référence pour un contenu qui peut être affiché ultérieurement sur un affichage avec une gamme chromatique différente de la gamme chromatique de référence est indiqué généralement par le numéro de référence 400.

Le résultat indésirable du flux de production de correction chromatique 400 de la figure 4 est que lors d'une correction chromatique sur un affichage avec un affichage chromatique de référence (RCG), les couleurs sur un affichage avec une seconde gamme chromatique ou la gamme chromatique 2 (CG2) seront reproduites incorrectement.

Le flux de production de correction chromatique 400 implique un côté de création de contenu 480 et un côté de consommation de contenu 490. Un affichage RCG 482 est utilisé sur le côté de création de contenu 480. Un affichage RCG 492 et un affichage CG2 494 sont utilisés sur le côté de consommation de contenu 590.

Le contenu d'images source peut être stocké, par exemple, dans un magasin de contenu d'images source 420. Le contenu d'image ayant subi une correction chromatique peut être stocké, par exemple, dans un magasin de contenu d'image ayant subi une correction chromatique 440.

Un module de correction chromatique 430 génère le contenu qui apparaît correct seulement sur un affichage du même type et avec la même gamme chromatique. Ainsi, les couleurs sur l'affichage CG2 n'apparaîtront pas les mêmes que les couleurs qui ont été corrigées chromatiquement sur l'affichage RCG. Il est très probable qu'au moins certaines des couleurs sur l'affichage RCG2 seront découpées et au moins certaines seront affichées avec la teinte erronée.

Le problème est illustré sur la figure 4 à l'aide de « l'image de ski », qui fait partie des images d'essai CIE-TC8-03 dans leurs « Guidelines for the Evaluation of Gamut Mapping Algorithms ». Avec l'aimable autorisation de Fujifilm Electronic Imaging Ltd. (UK). Comme nous pouvons le constater, sur le côté du consommation de contenu, l'image peut être récupérée correctement seulement sur un affichage avec RCG. L'image apparaîtra incorrecte et présentera les artefacts mentionnés ci-dessus si un affichage avec une gamme chromatique non égale à RCG (CG2) est utilisée pour l'affichage.

Ces inconvénients et ces désavantages et d'autres de l'art antérieur sont traités par les présents principes, qui concerne des procédés et des systèmes pour une correction chromatique afin d'obtenir des résultats prévisibles sur des affichages avec des gammes chromatiques différentes.

Selon un aspect des présents principes, il est proposé un procédé pour une correction chromatique. Le procédé comprend la réalisation d'une correction chromatique sur un contenu d'image source, à l'aide d'au moins un parmi un affichage de type non référence ayant une gamme chromatique de non référence et un affichage de type référence ayant une gamme chromatique de référence. L'étape de réalisation comprend la re-formation du contenu d'image source pour fournir un contenu d'image re-formé ayant subi une correction chromatique pour l'afficher sur les affichages de type référence ayant une gamme chromatique de référence. L'étape de réalisation comprend en outre la génération de métadonnées pour un mappage de gamme chromatique inverse ultérieur qui transforme chromatiquement le contenu d'image re-formé ayant subi une correction chromatique pour l'afficher sur des affichages de type non référence ayant une gamme chromatique de non référence. Le mappage de gamme chromatique inverse ultérieur est un fonctionnement inverse d'un mappage de gamme chromatique appliqué pendant la correction chromatique pour obtenir le contenu d'image re-formé ayant subi une correction chromatique pour l'afficher sur les affichages de type référence ayant la gamme chromatique de référence. Le contenu d'image source est re-formé seulement pour les affichages de type référence ayant la gamme chromatique de référence.

Selon un autre aspect des présents principes, il est proposé un système pour une correction chromatique. Le système comprend un module de correction chromatique pour réaliser une correction chromatique sur un contenu d'image source, à l'aide d'au moins un parmi un affichage de type non-référence ayant une gamme chromatique de non-référence et un affichage de type référence ayant une gamme chromatique de référence, pour fournir un contenu d'image re-formé ayant subi une correction chromatique pour l'afficher sur les affichages de type référence ayant une gamme chromatique de référence. Le système comprend en outre un module de mappage de gamme chromatique pour réaliser un mappage de gamme chromatique par rapport au contenu d'image re-formé ayant subi une correction chromatique pour l'afficher sur les affichages de type référence ayant la gamme chromatique de référence pour générer des métadonnées pour un mappage de gamme chromatique inverse ultérieur par rapport au mappage de gamme chromatique. Le mappage de gamme chromatique inverse ultérieur transforme le contenu d'image re-formé ayant subi une correction pour l'afficher sur des affichages de type non-référence ayant une gamme chromatique de non-référence. Le contenu d'image source est re-formé seulement pour les affichages de type référence ayant la gamme chromatique de référence.

Ces aspects, ces fonctionnalités et ces avantages et d'autres des présents principes découleront de la description détaillée suivante de modes de réalisation exemplaires, qui doit être lue en liaison avec les dessins d'accompagnement.

Les présents principes peuvent être mieux compris en accord avec les figures exemplaires suivantes, sur lesquelles :

la figure 1 est un diagramme représentant des mesures de gamme chromatique d'affichages disponibles actuellement, selon l'art antérieur ;
la figure 2 est un diagramme représentant un mappage de gamme chromatique exemple, selon l'art antérieur ;
la figure 3 est un diagramme représentant un changement de teinte sur une gradation blanche bleuissante en raison d'une restriction de gamme chromatique, selon l'art antérieur ;
la figure 4 est un diagramme de haut niveau représentant le exemple de flux de production exemple de flux de production pour une correction chromatique à l'aide d'un affichage ayant une gamme chromatique de référence pour un contenu qui peut être affiché ultérieurement sur un affichage avec une gamme chromatique différente de la gamme chromatique de référence, selon l'art antérieur ;
la figure 5 est un diagramme de haut niveau représentant le exemple de flux de production pour une correction chromatique afin d'obtenir un maître pour des affichages RCG et des métadonnées pour des affichages CG2, selon un mode de réalisation des présents principes ;
la figure 6 est un diagramme de haut niveau représentant le exemple de flux de production pour une correction chromatique afin d'obtenir un maître pour des affichages CG2, et un maître pour des affichages RCG selon un mode de réalisation des présents principes ;
la figure 7 est un diagramme de haut niveau représentant un autre exemple de flux de production pour une correction chromatique afin d'obtenir un maître pour des affichages RCG et des métadonnées pour des affichages CG2, selon un mode de réalisation des présents principes ; et
la figure 8 est un diagramme de haut niveau représentant un autre exemple de flux de production pour une correction chromatique afin d'obtenir un maître pour des affichages CG2, et un maître pour des affichages RCG selon un mode de réalisation des présents principes.

Les présents principes concernent des procédés et des systèmes pour une correction chromatique afin d'obtenir des résultats prévisibles sur des affichages avec des gammes chromatiques différentes.

La présente description illustre les présents principes.

Tous les exemples et le langage conditionnel exposés dans la présente sont destinés à des besoins pédagogiques pour aider le lecteur dans la compréhension des présents principes et des concepts apportés par l'inventeur ou les inventeurs à l'avancée de l'art, et doivent être interprétés comme étant sans limitation sur ces exemples et ces conditions exposés spécifiquement.

De plus, tous les énoncés dans la présente exposant des principes, des aspects et des modes de réalisation des présents principes, ainsi que des exemples spécifiques de ceux-ci, sont destinés à englober des équivalents de ceux-ci à la fois structurels et fonctionnels. De plus, il est envisagé que ces équivalents comprennent à la fois des équivalents connus actuellement ainsi que des équivalents développés dans le futur, c'est-à-dire, des éléments quelconques développés qui réalisent la même fonction, indépendamment de la structure.

Ainsi, par exemple, il apparaîtra à l'homme du métier que les schémas de principe exposés dans la présente représent ent des fûts conceptuels d'une circuiterie explicative incorporant les présents principes. De même, il apparaîtra que des organigrammes, des diagrammes de flux, des diagrammes de transition d'état quelconques, un pseudocode quelconque et similaires représentent divers processus qui peuvent être représentés pratiquement dans un support lisible par un ordinateur et donc exécutés par un ordinateur ou un processeur, que cet ordinateur ou ce processeur soit représenté explicitement ou non.

Les fonctions des divers éléments représentés sur les figures peuvent être produites grâce à l'utilisation d'un matériel dédié ainsi qu'à un matériel susceptible d'exécuter un logiciel en association avec un logiciel approprié. En cas de production par un processeur, les fonctions peuvent être produites par un processeur dédié unique, par un processeur partagé unique ou par une pluralité de processeurs individuels, dont certains peuvent être partagés. De plus, l'utilisation explicite du terme « processeur » ou « contrôleur » ne doit pas être interprétée comme se référant exclusivement à un matériel susceptible d'exécuter un logiciel, et peut comprendre implicitement, sans limitation, un matériel de processeur de signal numérique (« DSP »), une mémoire morte (« ROM ») pour stocker un logiciel, une mémoire vive (« RAM ») et un stockage non volatile.

D'autres matériels, conventionnels et/ou personnalisés, peuvent également être inclus. De même, des commutateurs quelconques représentés sur les figures sont seulement conceptuels. Leur fonction peut être réalisée grâce au fonctionnement d'une logique de programme, grâce à une logique dédiée, grâce à l'interaction d'une commande de programme et d'une logique dédiée, ou même manuellement, la technique particulière étant sélectionnable par le réalisateur comme il sera compris plus spécifiquement à partir du contexte.

Dans les revendications de ceux-ci, un élément quelconque exprimé comme un moyen pour réaliser une fonction spécifique est destiné à englober toute manière de réalisation de cette fonction comprenant, par exemple, a) une combinaison d'éléments de circuit qui réalise cette fonction ou b) un logiciel d'une forme quelconque, comprenant donc, un micrologiciel, un microcode ou similaire, combiné à une circuiterie appropriée pour exécuter ce logiciel afin de réaliser la fonction. Les présents principes tels que définis par ces revendications résident dans le fait que les fonctionnalités produites par les divers moyens exposés sont combinées et rassemblées de la manière demandée par les revendications. Il est donc considéré que des moyens quelconques qui peuvent obtenir ces fonctionnalités sont équivalents à ceux représentés dans la présente.

La référence dans la description à « un seul mode de réalisation » ou « un mode de réalisation » des présents principes signifie qu'une fonctionnalité, une structure, une caractéristique particulières et ainsi de suite décrites en liaison avec le mode de réalisation est comprise dans au moins un mode de réalisation unique des présents principes. Ainsi, les apparitions de l'expression « dans un seul mode de réalisation » ou « dans un mode de réalisation » apparaissant en divers endroits dans la description ne font pas toute référence au même mode de réalisation.

Comme utilisé dans la présente, l'acronyme « CG » indique une « gamme chromatique », l'acronyme « CGM » indique un « mappage de gamme chromatique », l'acronyme « RCG » indique une « gamme chromatique de référence » et l'acronyme « CG2 » indique une « gamme chromatique 2 ».

Également, comme utilisé dans la présente, l'expression « affichages RCG » fait référence à des affichages ayant un type de gamme indiqué comme une gamme chromatique de référence (RCG), tandis que l'expression « affichages CG2 » fait référence à des affichages ayant un type de gamme indiqué comme une seconde gamme chromatique, la seconde gamme chromatique étant différente de la gamme chromatique de référence.

Il faut être conscient que tandis que la description fournie dans la présente est pratiquement décrite relativement, par exemple, à une version d'image pour des affichages RCG, et une version d'image pour des affichages CG2, ou des métadonnées pour reconstruire l'image pour des affichages CG2, étant donné la variété des affichages de grande consommation disponibles, plus d'une version CG2 peut être générée, tout en conservant l'esprit des présents principes.

De plus, comme utilisée dans la présente, l'expression « gamme chromatique 709 » et des variations de celle-ci indiquent 709 couleurs qui, à leur tour, indiquent le cube chromatique défini par les trois couleurs primaires de luminophores et le point blanc défini dans ITU-R Bt.709.

Également, comme utilisée dans la présente, relativement à la transmission et la réception de métadonnées, l'expression « intra-bande » fait référence à la transmission et/ou la réception de ces métadonnées en même temps que le contenu d'image ayant subi une correction chromatique à afficher par un dispositif de consommation. En revanche, l'expression « hors-bande » fait référence à la transmission et/ou la réception des métadonnées séparément relativement au contenu d'image ayant subi une correction chromatique à afficher par un dispositif de consommation.

En outre, comme utilisées dans la présente, les expressions « correction chromatique » et « gradation chromatique » font référence de manière interchangeable au processus créatif pendant la post-production pour ajuster les couleurs de sorte que l'image exprime l'intention créative.

De plus, comme utilisée dans la présente, l'expression « maître » fait référence à un contenu d'affichage reformé, où le contenu d'affichage est re-formé pour une gamme chromatique particulière telle que, par exemple, RCG ou CG2.

Également, comme utilisé dans la présente, le terme « métadonnées » fait référence à des données telles que, par exemple, des valeurs entières, des valeurs non entières et/ou des valeurs booléennes, utilisées pour commander, démarrer ou arrêter des mécanismes de traitement chromatique, et modifier la fonctionnalité de ceux-ci. En outre, des métadonnées peuvent comprendre une description d'une table de mappage.

Par exemple, dans un mode de réalisation, une table de mappage chromatique pourrait être réalisée au moyen d'une 3-D LUT (table de consultation tridimensionnelle). Cette LUT est utilisé pour recevoir trois valeurs d'entrée, chaque valeur représentant un composant chromatique, rouge, vert ou bleu, et produisant un triplet prédéfini de valeurs de sortie, par exemple, rouge, vert et bleu, pour chaque triplet d'entrée rouge, vert et bleu individuel. Dans ce cas, les métadonnées de la création de contenu au client devraient alors comprendre une description de LUT.

Un autre mode de réalisation peut impliquer la description d'une fonction de mappage telle que, par exemple, une circuiterie et/ou ainsi de suite pour réaliser un « GOG » (gain, décalage, Gamma), qui est défini comme suit :

$$\text{Vsortie} = \text{Gain}*(\text{décalage} + \text{Ventrée})^{\wedge}\text{Gamma, pour chaque composant chromatique.}$$

Dans ce cas, les métadonnées devraient comprendre 9 valeurs, un ensemble de gain, décalage et Gamma pour chacun des trois composants chromatiques.

Bien entendu, les présents principes ne sont pas limités aux mode s de réalisation précédents et, étant donné les enseignements des présents principes fournis dans la présente, d'autres modes de réalisation impliquant d'autres mises en oeuvre de métadonnées sont facilement envisagées par l'homme du métier dans cet art et les arts connexes. De plus, comme utilisée dans la présente, l'expression « correction chromatique » fait référence à une procédure créative pour choisir manuellement les couleurs correctes (préférées) sur le côté de création de contenu (par opposition au côté de consommation du client). En conséquence, l'expression « module de correction chromatique » et les expressions similaires font référence à la structure nécessaire pour un coloriste afin de corriger manuellement ces couleurs. Ainsi, une telle structure peut impliquer une interface présentée au coloriste telle qu'une interface utilisateur graphique (GUI), des moyens de sélection pour permettre au coloriste de faire des sélections concernant, par exemple, des couleurs à remplacer et/ou modifier, et des moyens de mise en oeuvre pour mettre en oeuvre les sélections faites par le coloriste. Les moyens de sélection peuvent comprendre un ou plusieurs parmi les suivants : un clavier ; un pavé ; une souris ; des boutons ; des commutateurs ; et ainsi de suite.

Comme noté ci-dessus, les présents principes concernent un procédé et un système pour une correction chromatique afin d'obtenir des résultats prévisibles sur des affichages avec des gammes chromatiques différentes. Les présents principes corrigent des différences sur des couleurs entre des affichages cibles différents. Il faut être conscient que les présents principes concernent un contenu actuel (par exemple, des types et des technologies de codage) et des affichages actuels (par exemple, des types d'affichage, et des différences entre ceux-ci, ainsi que des types d'affichage différents, provenant, par exemple, d'un matériel, d'un logiciel et ainsi de suite) ainsi qu'un contenu et des affichages futurs, lorsqu'ils sont liés à l'utilisation de gammes chromatiques différentes.

Dans un mode de réalisation, les présents principes peuvent être utilisés pour traiter un problème exemplaire où une correction chromatique doit être réalisée sur un affichage avec une gamme chromatique de référence, cependant, les couleurs corrigées doivent être affichées sur un affichage avec une gamme chromatique différente de la gamme chromatique de référence utilisée pour la correction chromatique.

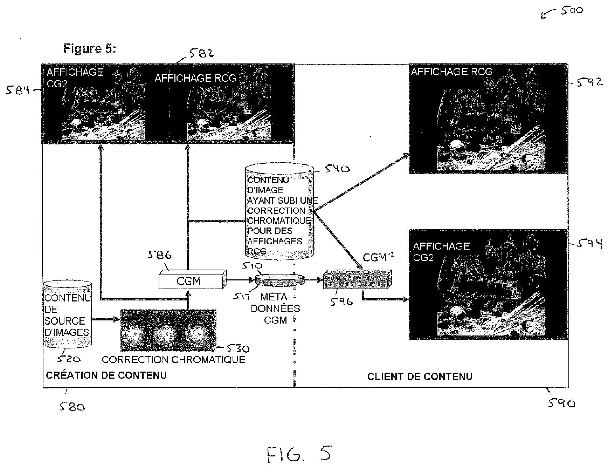

En référence à la figure 5, un diagramme de haut niveau représentant le exemple de flux de production pour une correction chromatique afin d'obtenir un maître pour des affichges RCG et des métadonnées pour des affichages CG2 est indiqué généralement par le numéro de référence 500.

Le flux de production de correction chromatique 500 implique un côté de création de contenu 580 et un côté de consommation de contenu 590. La correction chromatique 530 est faite sur la base d'une gamme chromatique pour des affichages CG2. Un affichage CG2 584 doit être directement rattaché à l'outil de correction chromatique. Un CGM 586 est utilisé pour mapper le contenu depuis une gamme chromatique pour l'afficher sur un affichage CG2 584 vers une gamme chromatique pour l'afficher sur un affichage RCG 582, et le contenu d'image résultant est ensuite utilisé pour la distribution/le stockage dans un magasin de contenus d'image ayant subi une correction chromatique 540. Un affichage RCG 592 et un affichage CG2 594 sont utilisés sur le côté de consommation de contenu 590.

Dans le mode de réalisation, l'utilisation des présents principes fournit une différence chromatique contrôlée entre le contenu affiché sur l'affichage RCG 592 et l'affichage CG2 594 sur le côté de consommation de contenu 590 comme fonctionnalité distinctive. Comme noté ci-dessus, le mode de réalisation implique l'utilisation d'un maître, c'est-à-dire, d'une version de contenu re-formé, pour (une utilisation par) des affichages RCG et des métadonnées pour (une utilisation par) des affichages CG2.

Les métadonnées 510 décrivent une transformation d'un contenu d'images source en un contenu d'image ayant subi une correction chromatique. Le contenu d'images source est re-formé pour des affichages RCG mais est corrigé chromatiquement pour des affichages CG2 (utilisant ainsi le GMM de CG2 vers RCG décrit ci-dessus) et le contenu d'image ayant subi une correction chromatique concerne des couleurs pour des affichages RCG. Ainsi, les métadonnées peuvent décrire, par exemple, la différence entre les couleurs pour un affichage CG2 et un affichage RCG. Autrement dit, les métadonnées peuvent décrire, par exemple, une transformation inverse du CGM 586 utilisé pour une correction chromatique, ou, les métadonnées peuvent décrire le CGM 586 lui-même et le bloc CGM 596 a la capacité de traitement pour inverser la description de CGM.

Le contenu d'images source peut être stocké, par exemple, dans un magasin de contenu d'images source 520. Le contenu d'image ayant subi une correction chromatique peut être stocké, par exemple, dans un magasin de contenu d'image ayant subi une correction chromatique 540. Les métadonnées 510 peuvent être stockées, par exemple, dans un magasin de métadonnées 517.

Un module de correction chromatique 530 génère le maître RCG et les métadonnées pour des affichages CG2.

Sur le côté de création de contenu 580, le contenu re-formé RCG, corrigé chromatiquement pour CG2, est fourni au module CGM 586 qui réalise un GMM de CG2 vers RCG de sorte que le contenu re-formé RCG est corrigé chromatiquement pour l'afficher sur l'afficher RCG 582.

Sur le côté de consommation de contenu 590, le contenu re-formé RCG, corrigé chromatiquement pour CG2, est fourni directement à l'affichage RCG 592 sans utiliser ou demander les métadonnées ni un mappage de gamme chromatique.

De plus, sur le côté de consommation de contenu 590, le contenu re-formé RCG, et les métadonnées pour les affichages CG2 sont appliqués à un module CGM 596 qui réalise un mappage de gamme chromatique inverse (c'est-à-dire, un GMM de RCG vers CG2) de sorte que le contenu re-formé RCG est transformé pour l'afficher sur l'affichage CG2 594. Autrement dit, en transmettant l'inverse du CGM de RCG vers CG2 (qui sera un CGM de RCG vers CG2) à l'affichage CG2 594, l'affichage CG2 594 est en mesure de faire l'inverse du fonctionnement CGM de CG2 vers RCG et de récupérer les couleurs du dispositif CG2.

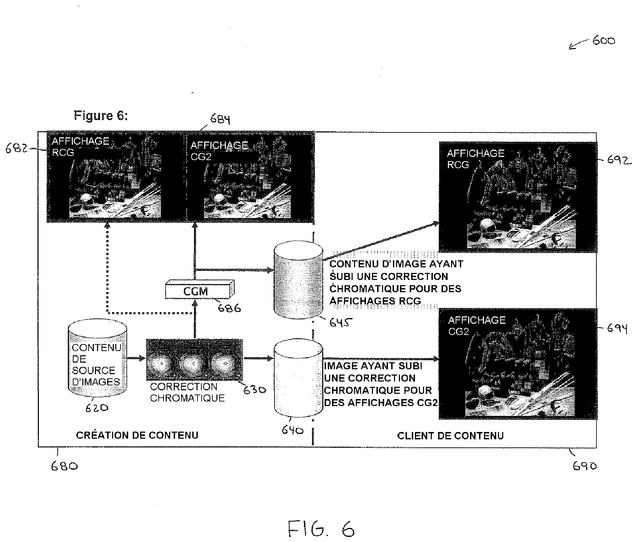

En référence à la figure 6, un diagramme de haut niveau représentant le exemple de flux de production pour une correction chromatique afin d'obtenir un maître pour des affichages CG2 et un maître pour des affichages RCG est indiqué généralement par le numéro de référence 600.

Le flux de production de correction chromatique 600 implique un côté de création de contenu 680 et un côté de consommation de contenu 690. Un affichage RCG 682 est utilisé sur le côté de création de contenu 680. De plus, un affichage CG2 684 doit être utilisé sur le côté de création de contenu 580 pour réviser le contenu destiné aux affichages RCG de consommation. Un affichage RCG 692 et un affichage CG2 694 sont utilisés sur le côté de consommation de contenu 690.

Dans un mode de réalisation, la correction chromatographique donnera un maître pour les affichages CG2 (tels que l'affichage CG2 694) et un maître pour les affichages RCG (tels que l'affichage RCG 692). Dans un mode de réalisation, le maître pour les affichages RCG est un dérivé du maître pour les affichages CG2. L'approche de la FIG. 6 fournit une différence chromatique contrôlée entre un affichage CG2 de consommation et un affichage RCG 590 comme caractéristique distinctive. La qualité de la précision de couleur est fonction de ce que les descriptions CG2 utilisées pour la correction chromatique correspondent à celles utilisées sur le terrain, ou que l'affichage sur le terrain est étalonné sur la description utilisées pour la correction chromatographique.

Le contenu d'images source peut être stocké, par exemple, dans un magasin de contenu d'images source 620. Le contenu d'image ayant subi une correction chromatique pour des affichages RCG, c.-à-d. le maître pour les affichages RCG, peut être stocké, par exemple, dans un magasin de contenu d'image ayant subi une correction chromatique 645. Le contenu d'image ayant subi une correction chromatique pour des affichages CG2, c.-à-d. le maître pour les affichages CG2, peut être stocké, par exemple, dans un magasin de contenu d'image ayant subi une correction chromatique 640.

Sur le côté de création de contenu, un module de correction chromatique 630 génère le maître CG2. De plus, sur le côté de création de contenu 680, le contenu re-formé CG2 est appliqué à un module CGM 686 qui réalise un mappage de gamme chromatique pour générer le maître RCG, de sorte que le contenu re-formé CG2 est corrigé chromatiquement pour l'afficher sur l'affichage RCG 682.

Sur le côté de consommation de contenu 690, le contenu re-formé RCG est fourni directement à l'affichage RCG 692 sans demander de mappage de gamme chromatique, et le contenu re-formé CG2 est fourni directement à l'affichage CG2 694 sans demander de mappage de gamme chromatique.

Il existe une seule description pour l'affichage RCG, et cependant de multiples descriptions devront être considérées pour des affichages CG2 et donc, dans un mode de réalisation, il serait avantageux que la version « mère » soit la version pour les affichages RCG. Dans certaines circonstances, le processus de correction chromatique peut être un peu fastidieux étant donné que les couleurs sont modifiées avec un mappage non linéaire entre la correction chromatique et l'affichage de référence. Certaines couleurs peuvent ne pas changer comme prévu initialement par le coloriste. Toutefois, il n'existera pas de couleurs dans le maître qui ne puissent pas être affichées par un affichage avec CG2, il n'existera pas non plus de couleur qui ne puisse pas être affichée par un affichage RCG. Ceci est un réel avantage de cette approche.

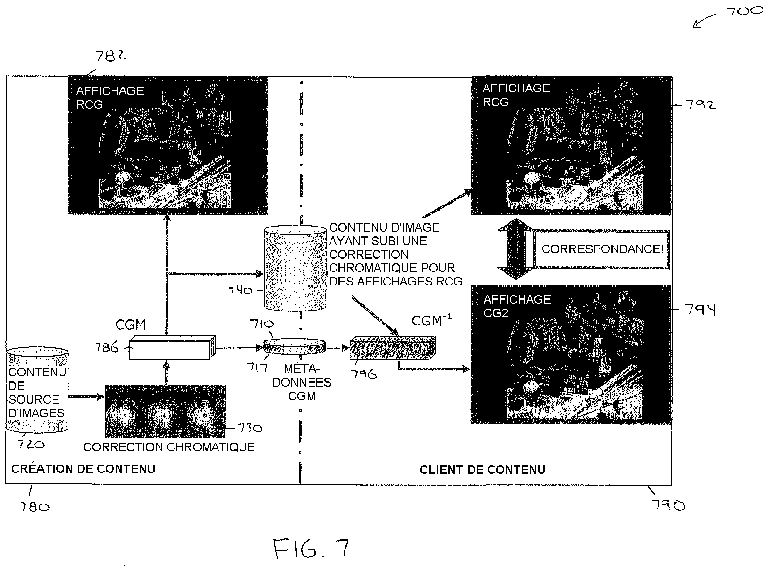

En référence à la figure 7, un diagramme de haut niveau représentant le exemple de flux de production pour une correction chromatique afin d'obtenir un maître pour des affichages RCG et des métadonnées pour des affichages CG2 est indiqué généralement par le numéro de référence 700.

Le flux de production de correction chromatique 700 implique un côté de création de contenu 780 et un côté de consommation de contenu 790. Un affichage RCG 782, utilisant une simulation CG2 par l'intermédiaire d'un module CGM 786, est utilisé sur le côté de création de contenu 780. En variante ou en outre, un affichage CG2 peut être utilisé sur le côté de création de contenu 780. Un affichage RCG 792 et un affichage CG2 794 sont utilisés sur le côté de consommation de contenu 790.

Dans le mode de réalisation, l'utilisation des présents principes fournit une différence chromatique contrôlée entre le contenu affiché sur l'affichage RCG 792 et l'affichage CG2 794 sur le côté de consommation de contenu 790. Comme noté ci-dessus, le mode de réalisation implique l'utilisation d'un maître, c'est-à-dire d'une version de contenu re-formé, pour (une utilisation par) des affichages RCG (en cas de rendu à l'aide d'un CGM qui simule un affichage CG2 sur un affichage RCG, c'est-à-dire qu'un GMM de CG2 vers RCG est utilisé) et des métadonnées pour (une utilisation par) des affichages CG2.

Les métadonnées 710 décrivent une transformation de contenu d'images source en un contenu d'image ayant subi une correction chromatique. Le contenu d'images source est re-formé pour des affichages RCG mais est corrigé chromatiquement pour des affichages CG2 (utilisant donc le GMM de CG2 vers RCG décrit ci-dessus pour le rendu du contenu re-formé RCG sur des affichages RCG) et le contenu d'image ayant subi une correction chromatique concerne des couleurs pour des affichages RCG. Ainsi, les métadonnées peuvent décrire, par exemple, la différence entre les couleurs pour un affichage CG2 et un affichage RCG. Autrement dit, les métadonnées peuvent décrire, par exemple, une transformation inverse de la simulation CG2 utilisée pour une correction chromatique.

Le contenu d'images source peut être stocké, par exemple, dans un magasin de contenu d'images source 720. Le contenu d'image ayant subi une correction chromatique peut être stocké, par exemple, dans un magasin de contenu d'image ayant subi une correction chromatique 740. Les métadonnées 710 peuvent être stockées, par exemple, dans un magasin de métadonnées 717.

Un module de correction chromatique 730 génère le maître RCG et les métadonnées pour des affichages CG2.

Sur le côté de création de contenu 780, le contenu re-formé RCG, corrigé chromatiquement pour CG2, est fourni au module CGM 786 qui réalise un GMM de CG2 vers RCG de sorte que le contenu re-formé RCG est corrigé chromatiquement pour l'afficher sur l'affichage RCG 782.

Sur le côté de consommation de contenu 790, le contenu re-formé RCG, corrigé chromatiquement pour CG2, est fourni directement à l'affichage RCG 792 sans utiliser ni demander les métadonnées ni un mappage de gamme chromatique.

De plus, sur le côté de consommation de contenu 790, le contenu re-formé RCG, corrigé chromatiquement pour CG2, et les métadonnées pour les affichages CG2 sont appliqués à un module CGM 796 qui réalise un mappage de gamme chromatique inverse (c'est-à-dire, un GMM de RCG vers CG2) de sorte que le contenu re-formé RCG est corrigé chromatiquement pour l'afficher sur l'affichage CG2 794. Autrement dit, en transmettant l'inverse du CGM de CG2 vers RCG (qui sera un CGM de RCG vers CG2) à l'affichage CG2 794, l'affichage CG2 794 est en mesure de faire l'inverse du fonctionnement CGM de CG2 vers RCG et de récupérer les couleurs du dispositif CG2.

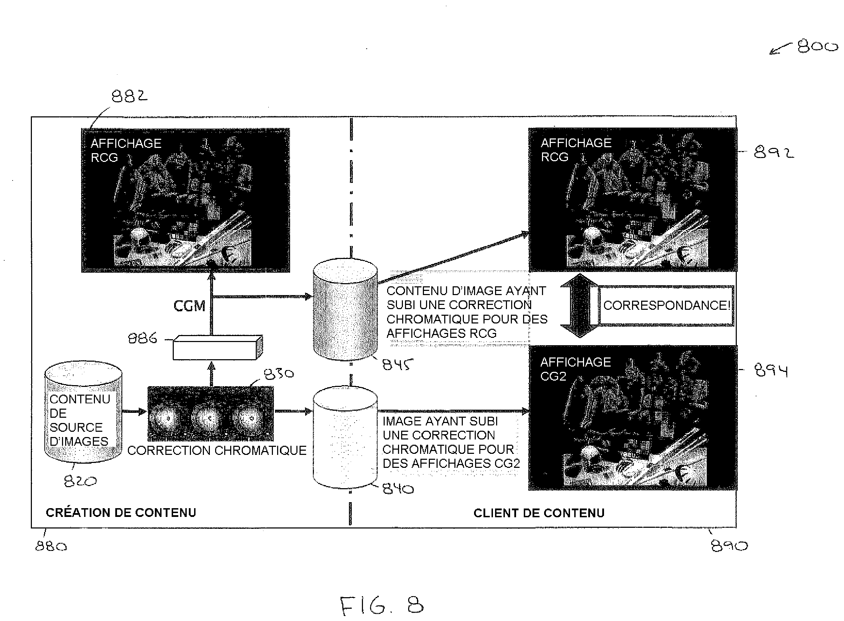

En référence à la figure 8, un diagramme de haut niveau représentant le exemple de flux de production pour une correction chromatique afin d'obtenir un maître pour des affichages CG2 et un maître pour des affichages RCG est indiqué généralement par le numéro de référence 800.

Le flux de production de correction chromatique 800 implique un côté de création de contenu 880 et un côté de consommation de contenu 890. Un affichage RCG 882 est utilisé sur le côté de création de contenu 880. Un affichage RCG 892 et un affichage CG2 894 sont utilisés sur le côté de consommation de contenu 890.

Dans un mode de réalisation, la correction chromatique aboutira à un maître pour des affichages CG2 (tels que l'affichage CG2 894), et un maître pour des affichages RCG (tels que l'affichage RCG 892). Dans un mode de réalisation, le maître pour les affichages RCG devrait être un dérivé du maître pour des affichages CG2. L'approche de la figure 8 fournit une correspondance entre un affichage CG2 de consommation et un affichage RCG. La qualité de la correspondance est fonction de ce que les descriptions CG2 utilisées pour une correction chromatique correspondent à celles utilisées sur le terrain, ou que l'affichage sur le terrain est étalonné sur la description utilisée pour une correction chromatique.

Le contenu d'images source peut être stocké, par exemple, dans un magasin de contenu d'images source 820. Le contenu d'image ayant subi une correction chromatique pour des affichages RCG, c. -à-d. le maître pour les affichages RCG, peut être stocké, par exemple, dans un magasin de contenu d'image ayant subi une correction chromatique 845. Le contenu d'image ayant subi une correction chromatique pour des affichages CG2, c.-à-d. le maître pour les affichages CG2, peut être stocké, par exemple, dans un magasin de contenu d'image ayant subi une correction chromatique 840.

Sur le côté de création de contenu, un module de correction chromatique 830 génère le maître CG2. De plus, sur le côté de création de contenu 880, le contenu re-formé CG2 est appliqué à un module CGM 886 qui réalise un mappage de gamme chromatique pour générer le maître RCG, de sorte que le contenu re-formé CG2 est corrigé chromatiquement pour l'afficher sur l'affichage RCG 882.

Sur le côté de consommation de contenu 890, le contenu re-formé RCG est fourni directement à l'affichage RCG 892 sans demander de mappage de gamme chromatique, et le contenu re-formé CG2 est fourni directement à l'affichage CG2 894 sans demander de mappage de gamme chromatique.

Il existe une seule description pour l'affichage RCG, et cependant de multiples descriptions devront être considérées pour des affichages CG2 et donc, dans un mode de réalisation, il serait avantageux si la version « mère » était la version pour les affichages RCG. Dans certaines circonstances, le processus de correction chromatique peut être un peu fastidieux étant donné que les couleurs sont modifiées avec un mappage non linéaire entre la correction chromatique et l'affichage de référence. Certaines couleurs peuvent ne pas changer comme prévu initialement par le coloriste. Toutefois, il n'existera pas de couleurs dans le maître qui ne peuvent pas être affichées par un affichage avec CG2, il n'existera pas non plus de couleur qui ne peut pas être affichée par un affichage RCG. Ceci est un réel avantage de cette approche.

Sur le côté de consommation de contenu, une circuiterie sera fournie qui connecte la source de signal à un affichage CG2. Cette circuiterie peut être mise en oeuvre dans un matériel et/ou dans un logiciel, et fournit la transformation de signal pour générer la version CG2 demandée en dehors de l'image pour des affichages RCG.

Ces fonctionnalités et ces avantages et d'autres des présents principes peuvent être facilement vérifiés par l'homme du métier sur la base des enseignements de la présente. Il doit être compris que les enseignements des présents principes peuvent être mis en oeuvre sous diverses formes de matériel, de logiciel, de micrologiciel, de processeurs spécialisés ou des combinaisons de ceux-ci.

Plus préférablement, les enseignements des présents principes seront mis en oeuvre comme une combinaison de matériel et de logiciel. De plus, le logiciel peut être mis en oeuvre comme un programme d'application incorporé de manière tangible dans une unité de stockage de programme. Le programme d'application peut être téléchargé sur une machine comprenant une architecture adéquate quelconque, et exécuté par celle-ci. De préférence, la machine est mise en oeuvre sur une plate-forme informatique ayant un matériel tel qu'une ou plusieurs unités centrales (« CPU »), une mémoire vive (« RAM ») et des interfaces d'entrée/sortie (« I/O »). La plate-forme informatique peut également comprendre un système d'exploitation et un code de micro-instructions. Les divers processus et les diverses fonctions décrites dans la présente peuvent faire partie soit du code de micro-instructions, soit du programme d'application, ou d'une combinaison quelconque de ceux-ci, qui peuvent être exécutés par une CPU. De plus, diverses autres unités périphériques peuvent être connectées à la plate-forme informatique telles qu'une unité de stockage de données additionnelle et une unité d'impression.

Il doit être compris en outre que, certains des composants et des procédés du système constitutif décrits sur les dessins d'accompagnement étant de préférence mis en oeuvre dans un logiciel, les connexions réelles entre les composants du système ou les blocs de fonctions de processus peuvent différer selon la manière de laquelle les présents principes sont programmés. Étant donné les enseignements dans la présente, l'homme du métier sera en mesure d'envisager ces mises en oeuvre ou ces configurations ou similaires des présents principes.

Bien que les modes de réalisation explicatifs aient été décrits dans la présente en faisant référence aux dessins d'accompagnement, il doit être compris que les présents principes ne sont pas limités à ces modes de réalisation précis, et que divers changements et diverses modifications peuvent être effectués dans ceux-ci par l'homme du métier sans s'écarter de la portée des présents principes. Tous ces changements et ces modifications sont destinés à être compris dans la portée des présents principes comme exposés dans les revendications annexées.

## Revendications

1. Procédé pour une correction chromatique, comprenant :

   une étape de réalisation d'une correction chromatique (530, 586) sur un contenu d'image source, à l'aide d'au moins un parmi un affichage de type non-référence ayant une gamme chromatique de non-référence et un affichage de type référence ayant une gamme chromatique de référence, ladite correction chromatique étant réalisée sur un contenu d'image source dans ladite gamme chromatique de non-référence ;

   dans lequel ladite étape de réalisation comprend :

   une étape de re-formation (586) du contenu d'image source pour fournir un contenu d'image re-formé ayant subi une correction chromatique pour l'afficher sur les affichages de type référence ayant une gamme chromatique de référence ; et une étape de génération (586) de métadonnées pour un mappage de gamme chromatique inverse ultérieur qui transforme chromatiquement le contenu d'image re-formé ayant subi une correction chromatique pour l'afficher sur des affichages de type non-référence ayant une gamme chromatique de non-référence, dans lequel les métadonnées décrivent la différence de couleur pour un affichage de type non référence ayant une gamme chromatique de non-référence et un affichage de référence ayant une gamme chromatique de référence, dans lequel le mappage de gamme chromatique inverse ultérieur est un fonctionnement inverse d'un mappage de gamme chromatique appliqué pendant la correction chromatique pour obtenir le contenu d'image re-formé ayant subi une correction chromatique pour l'afficher sur les affichages de type référence ayant la gamme chromatique de référence, et dans lequel le contenu d'image source est re-formé seulement pour les affichages de type référence ayant la gamme chromatique de référence.

**2.** Procédé selon la revendication 1, dans lequel ladite étape de re-formation du contenu d'image source comprend le rendu du contenu d'image re-formé ayant subi une correction chromatique sur l'affichage de type référence à l'aide d'un mappage de gamme chromatique qui convertit le contenu d'image source pour l'affichage de type non-référence en un contenu d'image pour l'affichage de type référence.

**3.** Procédé selon la revendication 1, comprenant en outre la transmission d'une description du mappage de gamme chromatique inverse à au moins un des affichages de type non-référence pour la consommation de client.

**4.** Procédé selon la revendication 1, dans lequel les métadonnées sont fournies aux affichages de type non-référence pour une consommation finale d'au moins une façon parmi l'intra bande et le hors bande par rapport au contenu d'affichage re-formé ayant subi une correction chromatique.

**5.** Procédé selon la revendication 1, dans lequel les affichages de type référence et les affichages de type non-référence sont au moins un parmi des affichages à cristaux liquides, des affichages à plasma, des affichages à tube cathodique, des affichages à traitement numérique de la lumière, des affichages à diodes électroluminescentes organiques, des affichages à cristaux liquides sur silicium et des affichages à intensificateur d'image à raccordement direct.

**6.** Système pour une correction chromatique, comprenant :

un module de correction chromatique (530) pour réaliser une correction chromatique sur un contenu d'image source, à l'aide d'au moins un parmi un affichage de type non-référence ayant une gamme chromatique de non-référence et un affichage de type référence ayant une gamme chromatique de référence ; ladite correction chromatique étant réalisée sur un contenu d'image source dans ladite gamme chromatique de non-référence pour fournir un contenu d'image re-formé ayant subi une correction chromatique pour l'afficher sur les affichages de type référence ayant une gamme chromatique de référence ; et
un module de mappage de gamme chromatique (586) pour réaliser un mappage de gamme chromatique par rapport au contenu d'image re-formé ayant subi une correction chromatique pour l'afficher sur les affichages de type référence ayant la gamme chromatique de référence afin de générer des métadonnées pour un mappage de gamme chromatique inverse ultérieur par rapport au mappage de gamme chromatique, le mappage de gamme chromatique inverse ultérieur transformant chromatiquement le contenu d'image re-formé ayant subi une correction chromatique pour l'afficher sur des affichages de type non-référence ayant une gamme chromatique de non-référence, dans lequel les métadonnées décrivent la différence de couleur pour un affichage de type non référence ayant une gamme chromatique de non-référence et un affichage de référence ayant une gamme chromatique de référence, dans lequel le contenu d'image source est re-formé seulement pour les affichages de type référence ayant la gamme chromatique de référence.

**7.** Système selon la revendication 6, dans lequel les métadonnées sont fournies aux affichages de type non-référence pour une consommation finale d'au moins une façon parmi l'intra bande et le hors bande par rapport au contenu d'affichage re-formé ayant subi une correction chromatique.

**8.** Système selon la revendication 6, dans lequel les affichages de type référence et les affichages de type non-référence sont au moins un parmi des affichages à cristaux liquides, des affichages à plasma, des affichages à tube cathodique, des affichages à traitement numérique de la lumière, des affichages à diodes électroluminescentes organiques, des affichages à cristaux liquides sur silicium et des affichages à intensificateur d'image à raccordement direct.

**Patentansprüche**

**1.** Verfahren für eine Farbkorrektur, umfassend:

einen Schritt zur Durchführung einer Farbkorrektur (530, 586) an einem Inhalt eines Quellbildes, mit Hilfe von wenigstens einer von einer Anzeige vom Nicht-Referenztyp mit einer Nicht-Referenzfarbskala oder einer Anzeige vom Referenztyp mit einer Referenzfarbskala, wobei die besagte Farbkorrektur an einem Inhalt eines Quellbildes in der besagten Nicht-Referenzfarbskala durchgeführt wird;
in welchem der besagte Schritt zur Durchführung umfasst:

einen Schritt zur Neu-Bildung (586) des Inhaltes eines Quellbildes, um einen neu gebildeten Bildinhalt zu liefern, der einer Farbkorrektur unterzogen wurde, um ihn auf den Anzeigen vom Referenztyp mit einer Referenzfarbskala anzuzeigen, und

einen Schritt zum Erzeugen (586) von Metadaten für ein späteres umgekehrtes Farbskala-Mapping, das den neu gebildeten Bildinhalt, der einer Farbkorrektur unterzogen wurde, farblich umwandelt, um ihn auf Anzeigen vom Nicht-Referenztyp mit einer Nicht-Referenzfarbskala anzuzeigen, in welchem die Metadaten den Farbunterschied für eine Anzeige vom Nicht-Referenztyp mit einer Nicht-Referenzfarbskala und eine Referenzanzeige mit einer Referenzfarbskala beschreiben,

in welchem das spätere umgekehrte Farbskala-Mapping eine umgekehrte Funktionsweise eines Farbskala-Mappings ist, angewendet während der Farbkorrektur, um den neu gebildeten Bildinhalt, der einer Farbkorrektur unterzogen wurde, zu erhalten, um ihn auf den Anzeigen vom Referenztyp mit der Referenzfarbskala anzuzeigen, und in welchem der Inhalt eines Quellbildes nur für die Anzeigen vom Referenztyp mit der Referenzfarbskala neu gebildet wird.

2. Verfahren nach Anspruch 1, in welchem der besagte Schritt zur Neubildung des Inhalts eines Quellbildes die Wiedergabe des neu gebildeten Bildinhalts, der einer Farbkorrektur unterzogen wurde, auf der Anzeige vom Referenztyp mit Hilfe eines Farbskala-Mappings umfasst, das den Inhalt eines Quellbildes für die Anzeige vom Nicht-Referenztyp in einen Bildinhalt für die Anzeige vom Referenztyp umwandelt.

3. Verfahren nach Anspruch 1, das des Weiteren die Übertragung einer Beschreibung des umgekehrten Farbskala-Mappings an mindestens eine der Anzeigen vom Nicht-Referenztyp für Verbrauch durch den Kunden umfasst.

4. Verfahren nach Anspruch 1, in welchem die Metadaten an die Anzeigen vom Nicht-Referenztyp geliefert werden, für einen Endverbrauch von mindestens einer Art des Innenbandes und des Außenbandes in Bezug auf den neu gebildeten Anzeigeinhalt, der einer Farbkorrektur unterzogen wurde.

5. Verfahren nach Anspruch 1, in welchem die Anzeigen vom Referenztyp und die Anzeigen vom Nicht-Referenztyp wenigstens eine von den Flüssigkristallanzeigen, Plasmaanzeigen, Kathodenstrahlröhrenanzeigen, Digital Light Processing-Anzeigen, Organischen Leuchtdioden-Anzeigen, Flüssigkristallanzeigen auf Siliziumbasis und Bildverstärkeranzeigen mit Direktanschluss sind.

6. System für eine Farbkorrektur, umfassend:

ein Modul zur Farbkorrektur (530), um eine Farbkorrektur an einem Inhalt eines Quellbildes durchzuführen, mit Hilfe von wenigstens einer von einer Anzeige vom Nicht-Referenztyp mit einer Nicht-Referenzfarbskala und einer Anzeige vom Referenztyp mit einer Referenzfarbskala, wobei die besagte Farbkorrektur an einem Inhalt eines Quellbildes in der besagten Nicht-Referenzfarbskala durchgeführt wird, um einen neu gebildeten Bildinhalt zu liefern, der einer Farbkorrektur unterzogen wurde, um ihn auf den Anzeigen vom Referenztyp mit einer Referenzfarbskala anzuzeigen, und

ein Modul zum Farbskala-Mapping (586), um ein Farbskala-Mapping in Bezug auf den neu gebildeten Bildinhalt durchzuführen, der einer Farbkorrektur unterzogen wurde, um ihn auf den Anzeigen vom Referenztyp mit der Referenzfarbskala anzuzeigen, um Metadaten für ein späteres umgekehrtes Farbskala-Mapping in Bezug auf ein Farbskala-Mapping zu erzeugen, wobei das spätere umgekehrte Farbskala-Mapping den neu gebildeten Bildinhalt, der einer Farbkorrektur unterzogen wurde, farblich umwandelt, um ihn auf den Anzeigen vom Nicht-Referenztyp mit einer Nicht-Referenzfarbskala anzuzeigen,

in welchem die Metadaten den Farbunterschied für eine Anzeige vom Nicht-Referenztyp mit einer Nicht-Referenzfarbskala und eine Referenzanzeige mit einer Referenzfarbskala beschreiben,

in welchem der Inhalt eines Quellbildes nur für die Anzeigen vom Referenztyp mit der Referenzfarbskala neu gebildet wird.

7. System nach Anspruch 6, in welchem die Metadaten an die Anzeigen vom Nicht-Referenztyp geliefert werden, für einen Endverbrauch von mindestens einer Art des Innenbandes und des Außenbandes in Bezug auf den neu gebildeten Anzeigeinhalt, der einer Farbkorrektur unterzogen wurde.

8. System nach Anspruch 6, in welchem die Anzeigen vom Referenztyp und die Anzeigen vom Nicht-Referenztyp wenigstens eine von den Flüssigkristallanzeigen, Plasmaanzeigen, Kathodenstrahlröhrenanzeigen, Digital Light Processing-Anzeigen, Organischen Leuchtdioden-Anzeigen, Flüssigkristallanzeigen auf Siliziumbasis und Bildverstärkeranzeigen mit Direktanschluss sind.

**Claims**

1.  Method for a color correction, comprising:

    a step for performing a color correction (530, 586) on source picture content, using at least one of a non-reference type display having a non-reference color gamut and a reference type display having a reference color gamut, said color correction being performed on source picture content in said non-reference color gamut;

    wherein said performing step comprises:

    a mastering step (586) of the source picture content to provide mastered color corrected picture content for display on reference type displays having a reference color gamut; and
    a metadata generating step (586) for a subsequent inverse color gamut mapping that color transforms the mastered color corrected picture content for display on non-reference type displays having a non-reference color gamut,
    wherein the metadata describes the color difference for a non-reference type display having a non-reference color gamut and a reference type display having a reference color gamut,
    wherein the subsequent inverse color gamut mapping is an inverse operation of a color gamut mapping applied during the color correction to obtain the mastered color corrected picture content for display on the reference type displays having the reference color gamut, and the source picture content is mastered only for the reference type displays having the reference color gamut.

2.  Method according to claim 1, wherein said step of mastering the source picture content comprises rendering the mastered color corrected picture content on the reference type display using a color gamut mapping that converts the source picture content for the non-reference type display to picture content for the reference type display.

3.  Method according to claim 1, further comprising transmitting a specification of the inverse color gamut mapping to at least one of the non-reference type displays for consumer consumption.

4.  Method according to claim 1, wherein the metadata is provided to the non-reference type displays for final consumption at least one of in-band and out-of-band with respect to the mastered color corrected picture content.

5.  Method according to claim 1, wherein the reference type displays and the non-reference type displays are at least one of liquid crystal displays, plasma displays, cathode ray tube displays, digital light processing displays, organic light emitting diode displays, liquid crystal on silicon displays, and direct drive image light amplifier displays.

6.  System for a color correction, comprising:

    a color correction module (530) for performing color correction on source picture content, using at least one of a non-reference type display having a non-reference color gamut and a reference type display having a reference color gamut; said color correction being performed on a source image content in said non-reference color gamut, to provide mastered color corrected picture content for display on the reference type displays having a reference color gamut; and
    a color gamut mapping module (586) for performing a color gamut mapping with respect to the mastered color corrected picture content for display on the reference type displays having the reference color gamut to generate metadata for a subsequent inverse color gamut mapping with respect to the color gamut mapping, the subsequent inverse color gamut mapping color transforming the mastered color corrected picture content for display on non-reference type displays having a non-reference color gamut,

    wherein the metadata describes the color difference for a non-reference type display having a non-reference color gamut and a reference type display having a reference color gamut, wherein the source picture content is mastered only for the reference type displays having the reference color gamut.

7.  System according to claim 6, wherein the metadata is provided to the non-reference type displays for final consumption of at least one of in-band and out-of-band with respect to the mastered color corrected picture content.

8.  System according to claim 6, wherein the reference type displays and the non-reference type displays are at least one of liquid crystal displays, plasma displays, cathode ray tube displays, digital light processing displays, organic light emitting diode displays, liquid crystal on silicon displays, and direct drive image light amplifier displays.

↙ 100

Legend:
— CIE1931_2deg
× Plasma 1
Plasma 3
Plasma 4
∞ ∞ CRT de client
— LCD 1
LCD 2 (WG)
LCOS
ITU-R Bt.709

aire de tracé

FIG. 1

FIG. 2

FIG. 3

FIG. 4

Figure 5:

FIG. 5

600

Figure 6:

684

682

AFFICHAGE RCG

AFFICHAGE CG2

AFFICHAGE RCG

692

CGM

686

CONTENU D'IMAGE AYANT SUBI UNE CORRECTION CHROMATIQUE POUR DES AFFICHAGES RCG

645

AFFICHAGE CG2

694

CONTENU DE SOURCE D'IMAGES

CORRECTION CHROMATIQUE

630

IMAGE AYANT SUBI UNE CORRECTION CHROMATIQUE POUR DES AFFICHAGES CG2

620

CRÉATION DE CONTENU

640

CLIENT DE CONTENU

680

690

FIG. 6

FIG. 7

EP 2 135 439 B1

FIG. 8

**EP 2 135 439 B1**

## RÉFÉRENCES CITÉES DANS LA DESCRIPTION

**Documents brevets cités dans la description**

- US 2005152612 A